# EUROPEAN PATENT SPECIFICATION

(11) **EP 3 690 283 B1**
(45) Date of publication and mention of the grant of the patent: **22.12.2021**
(21) Application number: 17927132.5
(22) Date of filing: 29.09.2017
(51) Int. Cl.: F16H 7/08

(54) **HYDRAULIC TENSIONER**
HYDRAULIKSPANNER
TENDEUR HYDRAULIQUE

(43) Date of publication of application: 05.08.2020
(73) Proprietor: Honda Motor Co., Ltd., Tokyo 107-8556 (JP)
(72) Inventor: TAKIGUCHI, Chikashi, Wako-shi Saitama 351-0193 (JP); MURAKI, Yuhei, Wako-shi Saitama 351-0193 (JP); TERADA, Yasuo, Wako-shi Saitama 351-0193 (JP)
(74) Representative: Kiwit, Benedikt
(86) International application number: PCT/JP2017/035528
(87) International publication number: WO 2019/064505

(56) References cited:
- JP-A- 2006 144 999
- JP-A- 2009 264 583
- JP-A- 2009 264 583

## Description

### Technical Field

The present invention relates to a hydraulic tensioner.

### Background Art

Some saddled vehicles, such as a motorcycle, include a hydraulic tensioner (also referred to as a hydraulic chain tensioner) that adjusts a slack of a cam chain in an internal combustion.

It is disclosed that such a type of a hydraulic tensioner includes a second hydraulic chamber that receives an oil leaking from a hydraulic chamber and increases in capacity with retraction of a plunger and a relief valve unit that discharges the oil with a pressure equal to or higher than a predetermined level in the second hydraulic chamber (for example, see Japanese Patent Laid-Open No. 2017-89843).

JP 2009-264583 A shows a hydraulic tensioner that comprises a tensioner body provided with a housing hole that is open at one end; a plunger that is slidably inserted in the housing hole, a biasing unit housed in a hydraulic chamber formed between the housing hole and the plunger to be extendable and retractable, the biasing unit biasing the plunger in a direction towards a tensioner slipper; an oil feeder that communicates with the hydraulic chamber and feeds an oil to the hydraulic chamber; a check valve unit disposed between the hydraulic chamber and the oil feeder; and a second hydraulic chamber that has a pressure lower than a pressure of the hydraulic chamber and into which the oil from the hydraulic chamber flows, the second hydraulic chamber being provided with a draining oil passage for draining the oil out of the hydraulic tensioner at the other end, where the hydraulic tensioner is attached to an internal combustion engine is installed in a vehicle, the hydraulic tensioner comprises a feeding oil passage including at least a part of the oil feeder and a branched oil passage branched downward from the feeding oil passage to be continuous with the hydraulic chamber,the feeding oil passage is inclined with respect to a horizontal plane when the vehicle is on a ground, and an inlet of the feeding oil passage in the flange member is disposed at a level lower than a level of an outlet of the feeding oil passage.

### Summary of Invention

### Technical Problem

However, since a hydraulic chamber and a second hydraulic chamber of a typical hydraulic tensioner are kept at a relatively high pressure, feeding a low-pressure oil may cause failure in sufficiently filling the hydraulic chamber with the oil. For example, in a case of a small-displacement internal combustion engine, a discharge pressure of an oil pump is lower than in a large-displacement internal combustion engine and thus a hydraulic chamber is likely to fail to be sufficiently filled with an oil.

The present invention has been made in view of the above circumstances and an object of the present invention is to readily feed an oil to a hydraulic chamber even when a hydraulic pressure is low.

### Solution to Problem

To achieve the above object, according to the present invention, a hydraulic tensioner includes: a a tensioner body (72) provided with a housing hole (72A) that is open at one end; a plunger (75) that is slidably inserted in the housing hole (72A); a biasing unit (83) housed in a hydraulic chamber (93) formed between the housing hole (72A) and the plunger (75) to be extendable and retractable, the biasing unit (83) biasing the plunger (75) in an advance direction; an oil feeder (94) that communicates with the hydraulic chamber (93) and feeds an oil to the hydraulic chamber (93); a check valve unit (95) disposed between the hydraulic chamber (93) and the oil feeder (94); and a second hydraulic chamber (97) that has a pressure lower than a pressure of the hydraulic chamber (93) and into which the oil from the hydraulic chamber (93) flows, the second hydraulic chamber (97) being provided with a draining oil passage (98) for draining the oil out of the hydraulic tensioner, wherein the hydraulic tensioner may be attached to an internal combustion engine (41) installed in a saddled vehicle (10), the hydraulic tensioner comprises a flange member (76) that closes one end of the housing hole (72A), the flange member (76) is provided with a feeding oil passage (81C) including at least a part of the oil feeder (94) and a branched oil passage (91) branched downward from the feeding oil passage (81C) to be continuous with the hydraulic chamber (93), the feeding oil passage (81C) is inclined with respect to a horizontal plane when the saddled vehicle (10) is on a ground, and an inlet (81C1) of the feeding oil passage (81C) in the flange member (76) is disposed at a level lower than a level of an outlet (81C2) of the feeding oil passage (81C) in the flange member (76).

In the above invention, the oil feeder (94) may include a third hydraulic chamber (92) into which the oil from the branched oil passage (91) flows, and the third hydraulic chamber (92) may have a pressure higher than the pressure of the second hydraulic chamber (97).

In addition, in the above invention, the hydraulic tensioner may further include an inner cylinder (86) inside the plunger (75), in which the plunger (75) includes a sliding portion (75S) that slides on an outer circumferential surface of the inner cylinder (86) in the advance direction and a direction opposite to the advance direction, the hydraulic chamber (93) is formed between the plunger (75) and the inner cylinder (86), and the oil from the hydraulic chamber (93) flows into the second hydraulic chamber (97) through a boundary portion (K1) between the sliding portion (75S) and the inner cylinder (86S) .

In addition, in the above invention, the second hydraulic chamber (97) may include a portion surrounded by the tensioner body (72), the plunger (75), the inner cylinder (86), and the flange member (76).

### Advantageous Effects of Invention

The hydraulic tensioner according to the present invention includes the second hydraulic chamber that has the pressure lower than the pressure of the hydraulic chamber to which the oil is fed from the oil feeder, and into which the oil from the hydraulic chamber flows, and the second hydraulic chamber is provided with the draining oil passage for draining the oil out of the hydraulic tensioner. This causes the oil in the hydraulic chamber to readily flow into the low-pressure chamber, allowing the oil to be readily fed to the hydraulic chamber even when the hydraulic pressure is low.

In the above invention, the oil feeder includes the third hydraulic chamber into which the oil flows and the third hydraulic chamber has the pressure higher than the pressure of the second hydraulic chamber. This causes the oil to be more readily fed to the hydraulic chamber due to a differential pressure between the third hydraulic chamber and the second hydraulic chamber even when the hydraulic pressure is low.

Moreover, in the above invention, the flange member, which closes the one end of the housing hole where the plunger is inserted, is provided with the feeding oil passage that constitutes at least the part of the oil feeder, the feeding oil passage communicates with the third hydraulic chamber, and the center axis of the third hydraulic chamber intersects with the feeding oil passage and has the diameter larger than the diameter of the feeding oil passage. This makes it possible to transfer the hydraulic pressure from the oil feeder to the plunger without delay when oil feeding is started from a stop state, for example.

Moreover, in the above invention, the plunger includes the sliding portion that slides on the outer circumferential surface of the inner cylinder disposed inside the plunger, the oil from the hydraulic chamber formed between the plunger and the inner cylinder flows into the second hydraulic chamber through the boundary portion between the sliding portion and the inner cylinder. This makes it possible to keep the hydraulic chamber at a high pressure and to cause the oil in the hydraulic chamber to flow into the second hydraulic chamber.

Moreover, in the above invention, the second hydraulic chamber is the portion surrounded by the tensioner body, the plunger, the inner cylinder, and the flange member. Thus, the second hydraulic chamber is easy to form without the necessity of increasing the number of components.

Moreover, in the above invention, the hydraulic tensioner is attached to the internal combustion engine installed in the saddled vehicle, the flange member is provided with the branched oil passage branched downward from the feeding oil passage to be continuous with the third hydraulic chamber, the feeding oil passage is inclined with respect to the horizontal plane when the saddled vehicle is on the ground, the inlet of the feeding oil passage in the flange member is disposed at the level lower than the level of the outlet of the feeding oil passage in the flange member. This allows for guiding air (corresponding to bubbles) mixed in the oil to the outlet of the feeding oil passage, thereby making it difficult for the air to enter the third hydraulic chamber.

### Brief Description of Drawings

[Figure 1] Figure 1 is a right side view showing a saddled vehicle including a hydraulic tensioner according to an embodiment of the present invention.
[Figure 2] Figure 2 is a sectional view taken along a line II-II in Figure 1.
[Figure 3] Figure 3 is a side sectional view showing a cam chain in an engine along with a peripheral configuration.
[Figure 4] Figure 4 is a diagram showing the hydraulic tensioner along with a peripheral configuration.
[Figure 5] Figure 5 is a diagram showing a sliding portion in Figure 4 along with a peripheral configuration on an enlarged scale.

### Description of Embodiment

Description will be made on an embodiment of the present invention with reference to the drawings. It should be noted that directions, such as front and rear, right and left, and up and down, mentioned in the description mean the same as directions relative to a vehicle unless otherwise described. In addition, a reference sign FR in the drawings means a front side of a vehicle body, a reference sign UP means an upper side of the vehicle body, and a reference sign LH means a left side of the vehicle body.

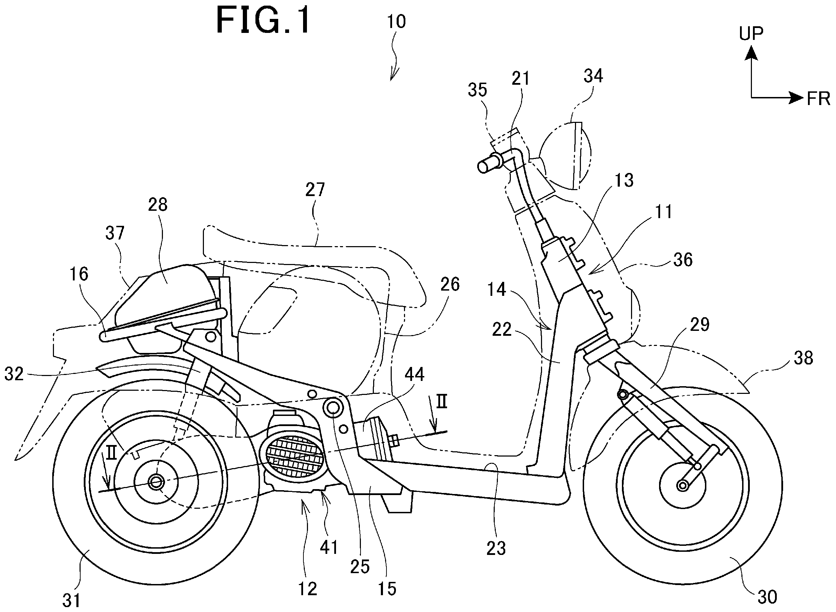

Figure 1 is a right side view of a saddled vehicle 10 including a hydraulic tensioner 71 according to the embodiment of the present invention. The saddled vehicle 10, which includes a vehicle body frame 11 and a power unit 12 swingably supported by the vehicle body frame 11, is a so-called unit swing motorcycle (also referred to as a scooter vehicle). Meanwhile, the saddled vehicle 10 is a compact vehicle, where a displacement of an engine 41 of the power unit 12 is small (for example, less than 300 cc) .

The vehicle body frame 11 includes a front frame 14 extending downward and rearward from a head pipe 13 disposed at a front end, a center frame 15 extending upward and rearward from a rear end portion of the front frame 14, and a rear frame 16 disposed at a rear end portion of the center frame 15.

The head pipe 13 supports a steering handle 21, allowing the steering handle 21 to be steered. The front frame 14 includes a down frame 22 extending downward from the head pipe 13 and a step floor portion 23 extending rearward from a lower portion of the down frame 22 to serve as a footrest for a rider.

The center frame 15 extends rearward behind the step floor portion 23 with a right-and-left interval, supporting a pivot shaft 25 behind and above the step floor portion 23. The center frame 15 supports the power unit 12 via the pivot shaft 25, allowing the power unit 12 to swing up and down. Moreover, the center frame 15 supports a housing box 26 above the power unit 12. An upper surface of the housing box 26 is attached with a rider seat 27, allowing the housing box 26 to be opened and closed. The rear frame 16, which includes a metal pipe, supports a fuel tank 28 behind the rider seat 27.

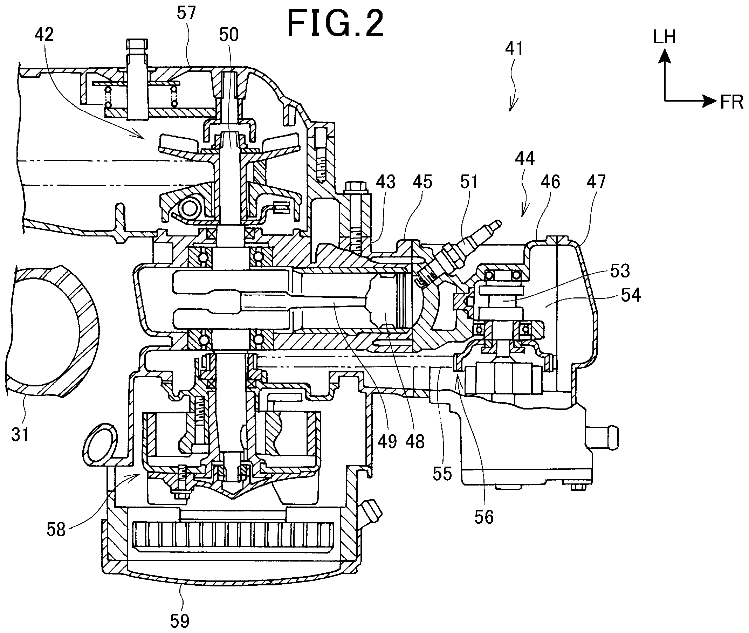

A front fork 29 is coupled to the steering handle 21 and a front wheel 30 is rotatably supported at a lower end portion of the front fork 29. The power unit 12 is a unit including the engine 41 constituting an internal combustion engine and a transmission 42 (later described Figure 2), which are integral with each other. A rear wheel 31 is rotatably supported at a rear portion of the power unit 12.

A rear cushion 32 is disposed between the power unit 12 and the center frame 15. It should be noted that in Figure 1, a reference sign 34 is a headlight, a reference sign 35 is a meter unit, a reference sign 36 is a front cowl, a reference sign 37 is a rear cowl, and a reference sign 38 is a front fender.

Figure 2, which is a sectional view taken along a line II-II in Figure 1, shows an inner structure of the power unit 12 along with a peripheral configuration.

The engine 41, which is a single-cylinder four-cycle engine, is in the form of a forward-tilted engine with a cylinder 44 being tilted forward from a crankcase 43 to be almost in a horizontal state. The cylinder 44 includes a cylinder block 45, a cylinder head 46, and a cylinder head cover 47 in sequence from near the crankcase 43.

A piston 48 is slidably disposed inside the cylinder 44. A crankshaft 50 coupled to a piston 48 via a con rod 49 is rotatably supported in the crankcase 43. Reciprocation of the piston 48 causes the crankshaft 50 to rotate accordingly. A spark plug 51 is attached to the cylinder head 46 with an end of the spark plug 51 facing a combustion chamber between the piston 48 and the cylinder head 46.

A valve operating chamber 54, in which a camshaft 53 is housed in parallel with the crankshaft 50, is formed between the cylinder head 46 and the cylinder head cover 47.

The camshaft 53, which is rotatably supported between the cylinder head 46 and the cylinder head cover 47, rotates with the crankshaft 50 via a cam chain 55 (corresponding to a transfer member) wound around and between the camshaft 53 and the crankshaft 50, driving an intake and exhaust valve (not shown) to take in and exhaust air in accordance with a four cycle. Such a camshaft 53, a cam chain 55, etc. constitute a valve-operating mechanism 56 that controls air intake and exhaust of the engine 41.

A driving force of the crankshaft 50 is transferred to the rear wheel 31 through the transmission 42. The transmission 42 includes a continuously variable transmission, namely, a V-belt transmission mechanism, and transfers rotation of the crankshaft 50 to the rear wheel 31 while changing gears at a variety of change gear ratios. The transmission 42 also serves as a power transfer device that transfers a driving force of the engine 41 to the rear wheel 31.

In Figure 2, a reference sign 57 is a transmission casing that covers the transmission 42 from outside along a vehicle-width direction (left side in the present configuration), a reference sign 58 is a generator disposed on the crankshaft 50 at a side opposite the transmission 42 (right side in the present configuration), and a reference sign 59 is a generator cover that covers the generator 58 from outside along the vehicle-width direction (right side in the present configuration).

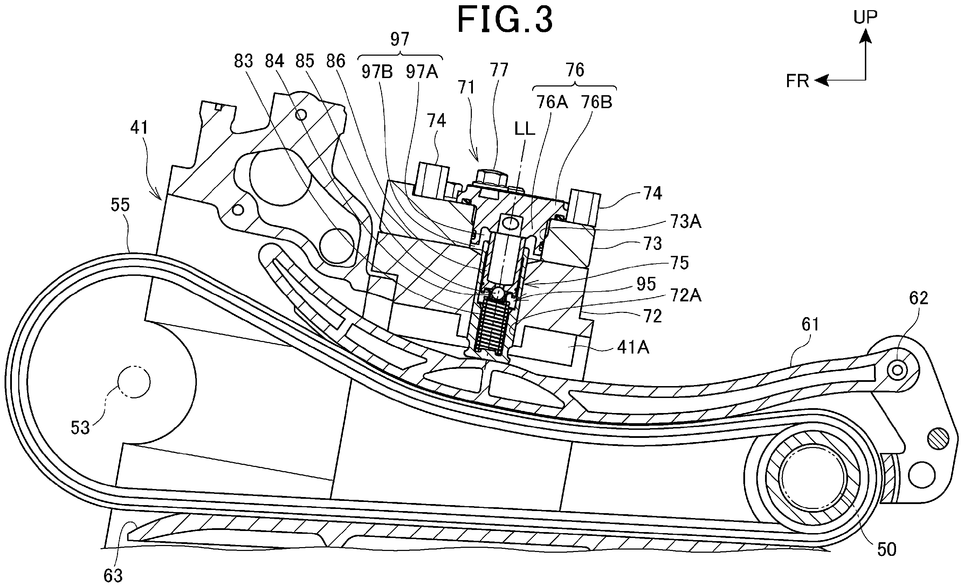

Figure 3 is a side sectional view showing the cam chain 55 in the engine 41 along with a peripheral configuration. It should be noted that Figure 3 shows directions defined when the saddled vehicle 10 is on the ground.

A tensioner slipper 61 (also referred to as shoe), which is in slidable contact with an upper side (corresponding to a relaxation side) of the cam chain 55, is disposed in the engine 41. The tensioner slipper 61 is formed in an arcuate shape convex downward toward the cam chain 55. The tensioner slipper 61 includes a support shaft 62 disposed at a longitudinal end portion (a rear end portion in the present configuration) of the tensioner slipper 61. The support shaft 62 is rotatably coupled to the engine 41, whereby the tensioner slipper 61 is swingably supported toward a side facing the cam chain 55 (a lower side in the present configuration) with respect to the support shaft 62.

The tensioner slipper 61, which is a biased member to be biased toward the cam chain 55 by a later-described plunger 75, adjusts a slack of the cam chain 55. In addition, a chain guide 63 is disposed at a lower side (corresponding to a towing side) of the cam chain 55, being in slidable contact with the cam chain 55 to guide a movement of the cam chain 55.

The engine 41 includes a tensioner attachment portion 41A at an upper side opposite the cam chain 55 with respect to the tensioner slipper 61 and the hydraulic tensioner 71 is fixed to the tensioner attachment portion 41A.

The hydraulic tensioner 71 includes a tensioner body 72 placed on the tensioner attachment portion 41A from above and a cap 73 placed on the tensioner body 72 from above. As shown in Figure 3, a plurality of fastening members 74 (for example, fastening bolts) penetrate through the cap 73 and the tensioner body 72 from above. The fastening members 74 are fastened to the tensioner attachment portion 41A, thereby fixing the cap 73 and the tensioner body 72 to the tensioner attachment portion 41A.

The tensioner body 72 has a plunger housing hole 72A that linearly extends upward and rearward with a lower end being open inside the engine 41. The cap 73 has a through hole 73A in communication with the plunger housing hole 72A. The plunger 75 is inserted in the plunger housing hole 72A of the tensioner body 72 while being slidable in an axial direction of the housing hole 72A.

In Figure 3, a reference sign LL is a center axis of the plunger 75. The center axis (hereinafter referred to as axis) LL is inclined downward and rearward with respect to a vertical direction in a side view of the vehicle body.

The through hole 73A of the cap 73 is closed by a cover member 76 (corresponding to a flange member). The cover member 76 includes a shaft 76A inserted in the through hole 73A and a flange 76B with an increased diameter at an upper portion of the shaft 76A, which are integral with each other. The cover member 76 is fixed to the cap 73 by a fastening member 77 (for example, a fastening bolt).

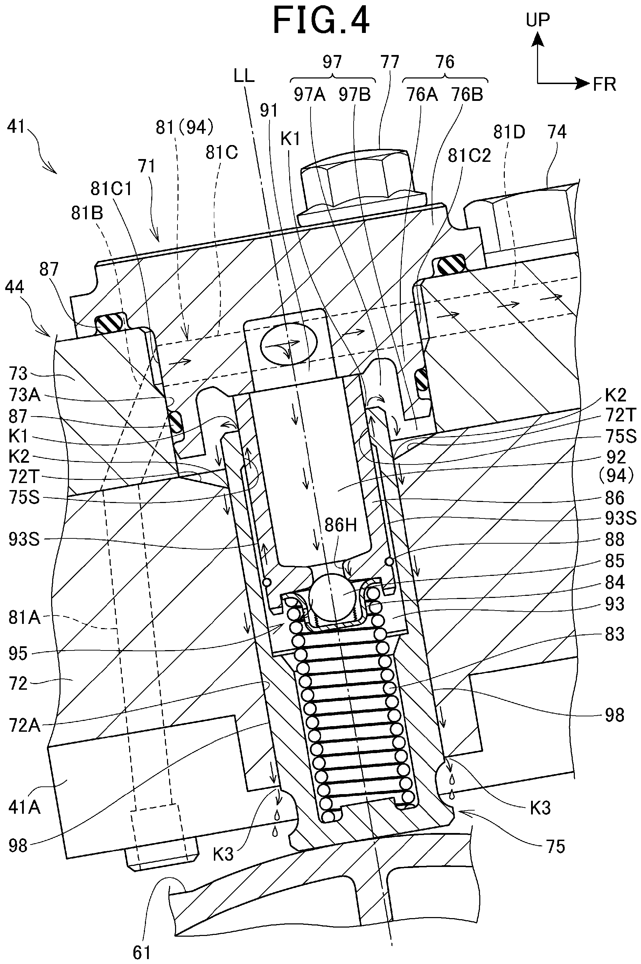

Figure 4 is a diagram showing the hydraulic tensioner 71 along with a peripheral configuration. It should be noted that Figure 4 shows directions defined when the saddled vehicle 10 is on the ground in the same manner as Figure 3. In addition, Figure 4 also shows the axis LL of the plunger 75.

The tensioner body 72, the cap 73, and the cover member 76 constitute a housing surrounding the plunger 75 and are provided with an oil feeding oil passage 81, which is an oil passage where an oil is fed from an oil pump (not shown).

Specifically, the oil feeding oil passage 81 includes a first oil passage 81A that penetrates through the tensioner body 72, a second oil passage 81B that communicates with the first oil passage 81A and penetrates through the cap 73, a third oil passage 81C that communicates with the second oil passage 81B and penetrates through the cover member 76, and a fourth oil passage 81D that communicates with the third oil passage 81C and penetrates through an inside of the cap 73 toward a head side (a side facing the valve operating chamber 54) of the cylinder 44.

The first oil passage 81A is an upstream oil passage in the oil feeding oil passage 81, where the oil is first fed from the oil pump. The first oil passage 81A extends upward substantially along the axis LL of the plunger 75, penetrating through the tensioner body 72. The second oil passage 81B is configured as an oil passage that connects an outlet of the first oil passage 81A and the through hole 73A of the cap 73.

The third oil passage 81C is configured as an oil passage that extends through the cap 73 in a direction perpendicular to the axis LL of the plunger 75 (corresponding to upward and forward). The fourth oil passage 81D extends in the direction perpendicular to the axis LL of the plunger 75 in the same manner as the third oil passage 81C. It should be noted that respective 0-rings 87 are disposed at upper and lower sides of the third oil passage 81C between the cover member 76 and the cap 73.

In the structure of the embodiment, an outer periphery of the cover member 76 is provided with the O-ring 87 that is circumferentially pressed to separate the feeding oil passage 81 from a second hydraulic chamber 97, while the flange 76 of the cover member 76 is provided with the O-ring 87 that is pressed in a plunger-advance direction to isolate the feeding oil passage 81 from an outside.

The plunger 75 is in the shape of a bottomed cylinder that is closed at a side that comes into contact with the tensioner slipper 61. A coil spring 83, a valve seat 84, a ball valve 85, and an inner cylinder 86 are inserted in this sequence in the plunger 75. An end portion of the plunger 75 opposite the tensioner slipper 61 is configured as a sliding portion 75S that has a diameter reduced toward the inner cylinder 86 and is slidable on an outer circumferential surface of the inner cylinder 86.

Sliding of the sliding portion 75S on the outer circumferential surface of the inner cylinder 86 in an advance direction, i.e., toward the tensioner slipper 61, and a direction opposite to the advance direction makes is possible for the plunger 75 to smoothly move along an axial direction.

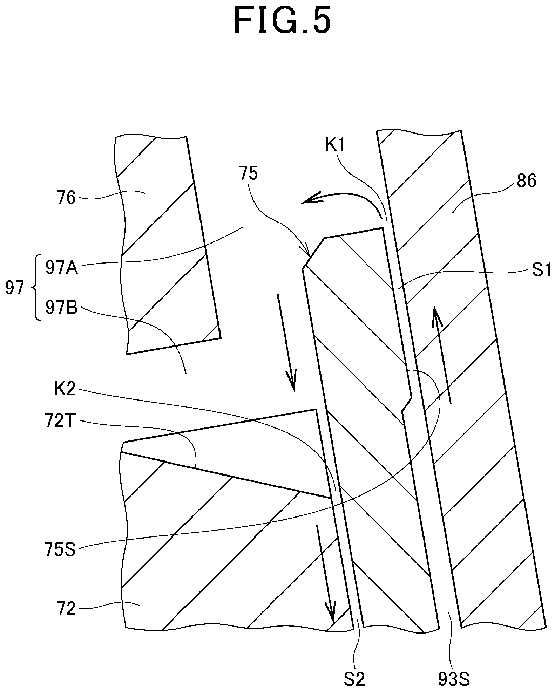

Figure 5 is a diagram showing the sliding portion 75S in Figure 4 along with a peripheral configuration on an enlarged scale. As shown in Figure 5, a slight gap S1 is formed in a boundary portion K1 between the sliding portion 75S of the plunger 75 and the outer circumferential surface of the inner cylinder 86. Similarly, a slight gap S2 is formed in a boundary portion K2 between an outer circumferential surface of the plunger 75 and an inner circumferential surface of the tensioner body 72.

The inner cylinder 86, which is formed in a cylindrical shape, comes into contact with the cover member 76 at an end portion facing the cover member 76 as shown in Figure 4. An oil passage (hereinafter referred to as branched oil passage) 91 branched downward from the third oil passage 81C is formed in the cover member 76. The branched oil passage 91 communicates with a hydraulic chamber (hereinafter referred to as inner cylinder hydraulic chamber) 92, which is an inner space of the inner cylinder 86. The oil partly flows into the inner cylinder hydraulic chamber 92 from the third oil passage 81C through the branched oil passage 91.

In the present configuration, the branched oil passage 91 is branched downward with a level difference between the branched oil passage 91 and an original passage, i.e., the third oil passage 81C. Thus, it is possible to separate vapor and liquid by the level difference. In other words, if air is mixed in the oil, it is possible to make it difficult for the air (corresponding to bubbles), which is lighter than the oil, to enter the branched oil passage 91.

Moreover, as shown in Figure 4, an inlet 81C1 of the third oil passage 81C is disposed at a level lower than a level of an outlet 81C2 of the third oil passage 81C. This makes it possible to readily guide the bubbles to the outlet 81C2 of the third oil passage 81C.

The branched oil passage 91 and the inner cylinder hydraulic chamber 92 linearly extend downward along the axis LL of the plunger 75 and at least the inner cylinder hydraulic chamber 92 is configured as a space larger in diameter than the oil feeding oil passage 81 including the third oil passage 81C. This allows a hydraulic pressure from an oil feeder 94 to be smoothly transferred to the inner cylinder hydraulic chamber 92. Thus, when oil feeding is started from a stop state, for example, the hydraulic pressure from the oil feeder 94 is transferred to the plunger 75 without delay.

The inner cylinder hydraulic chamber 92 communicates with a hydraulic chamber (hereinafter referred to as high-pressure chamber) 93 formed between the inner cylinder 86 and the plunger 75 through a communication hole 86H provided at an end portion of the inner cylinder 86 facing the tensioner slipper 61. In other words, the above oil feeding oil passage 81, the branched oil passage 91, and the inner cylinder hydraulic chamber 92 communicate with the high-pressure chamber 93, functioning as the oil feeder 94 that feeds the oil to the high-pressure chamber 93.

The ball valve 85 is disposed between the inner cylinder hydraulic chamber 92 and the high-pressure chamber 93, being biased toward the communication hole 86H through the valve seat 84 by the coil spring 83. Such components thus function as a check valve unit 95 between the inner cylinder hydraulic chamber 92 and the high-pressure chamber 93. The check valve unit 95 lets the oil flow from the inner cylinder hydraulic chamber 92 to the high-pressure chamber 93 while preventing the oil from inversely flowing from the high-pressure chamber 93 to the inner cylinder hydraulic chamber 92.

In addition, the coil spring 83 functions as a biasing unit that biases the plunger 75 in the advance direction, i.e., toward the tensioner slipper 61, with respect to the inner cylinder 86. In the present configuration, the coil spring 83 is exemplarily used but any biasing member other than a coil spring may be used.

As shown in Figure 4, a gap 93S is formed between an inner circumferential surface of the plunger 75 except the sliding portion 75S and the outer circumferential surface of the inner cylinder 86. Since the gap 93S communicates with the high-pressure chamber 93, a part of the oil entering the high-pressure chamber 93 also enters the gap 93S.

An O-ring 88 is attached on the outer circumferential surface of the inner cylinder 86 at an upstream side of the above gap 93S (corresponding to a side facing the high-pressure chamber 93) and an opening area of the above gap 93S is reduced by the O-ring 88.

The O-ring 88 makes it possible to increase a flow-passage resistance from the high-pressure chamber 93 to the gap 93S and also makes adjustment easier to prevent a predetermined amount or more of the oil from entering at once. In addition, it is also possible to finely adjust the flow-passage resistance by changing a wire diameter (also referred to as thickness) of the O-ring 88.

Alternatively, a clip may be disposed on the outer circumferential surface of the inner cylinder 86 instead of the O-ring 88 being disposed. In this case, since the clip is in contact with a step defined below a sliding surface, it is possible to hold the plunger 75 and the inner cylinder 86 as a sub-assembly as being pressed by the biasing member (spring) 83 not to be separated.

In Figure 4, a flow of the oil is represented by an arrow.

As shown in Figure 4, while the oil is fed through the oil feeding oil passage 81 to the head side (the valve operating chamber 54, etc.) of the cylinder 44, the oil in the oil feeding oil passage 81 partly enters the high-pressure chamber 93 of the hydraulic tensioner 71 through the branched oil passage 91.

In the present configuration, a hydraulic chamber (hereinafter referred to as low-pressure chamber) 97, a pressure of which is lower than a pressure of the high-pressure chamber 93, is disposed in a draining route for draining the oil from the high-pressure chamber 93 through the above gap 93S out of the hydraulic tensioner 71.

The low-pressure chamber 97 is a space formed between members surrounding the plunger 75, that is, the tensioner body 72, the cap 73, and the cover member 76, and the plunger 75 and the inner cylinder 86. More specifically, the low-pressure chamber 97 has a first space 97A, which is outside the plunger 75 and communicates with the boundary portion K1 (a portion where the slight gap S1 (Figure 5) is formed) between the sliding portion 75S of the plunger 75 and the outer circumferential surface of the inner cylinder 86, and a second space 97B, which is outside the plunger 75 and communicates with the first space 97A. The first space 97A and the second space 97B are configured as a space circumferentially continuous around the axis LL of the plunger 75.

The first space 97A is formed by making a diameter of the shaft 76A of the cover member 76 larger than a diameter of the plunger 75 and making a bottom surface of the shaft 76A concave upward. In addition, the first space 97A is configured as a space relatively enlarged in an up-down direction along the axis LL of the plunger 75 to efficiently ensure a capacity.

The second space 97B is a space that is continuous with the first space 97A and communicates with the boundary portion K2 (a portion where the slight gap S2 (Figure 5) is formed) between the outer circumferential surface of the plunger 75 and the inner circumferential surface of the tensioner body 72. The second space 97B is configured as a space with a diameter increased outward in a radial direction of the plunger 75 with respect to the first space 97A to efficiently ensure a capacity.

Moreover, an upper surface 72T of the tensioner body 72, which defines a bottom surface of the second space 97B, is configured as an inclined surface inclined downward toward the outer circumferential surface of the plunger 75. This allows the oil stuck on the upper surface 72T to be gravitationally fed to the slight gap formed in the boundary portion K2 between the plunger 75 and the tensioner body 72.

The gap formed in the above boundary portion K2 is open inside the engine 41. Such an opening portion (in Figure 4, designated by a reference sign K3) serves as an oil drain port for draining the oil out of the plunger 75. In other words, an oil route leading from the boundary portion K2 to the oil drain port K3 functions as a draining oil passage 98 for draining the oil entering the low-pressure chamber 97 out of the hydraulic tensioner 71. The oil drained out of the hydraulic tensioner 71 enters an oil pan disposed at a lower portion of the engine 41 and fed again to the oil feeding oil passage 81 by the oil pump.

In the present configuration, the low-pressure chamber 97 communicates with a space outside the plunger 75 (corresponding to a space inside the engine 41) through the gap S2 present in the boundary portion K2 between the plunger 75 and the tensioner body 72. This makes it possible to keep a pressure of the low-pressure chamber 97 lower than a pressure of the high-pressure chamber 93, although being made higher than a pressure in the space outside the plunger 75 by the oil fed to drive the engine. In addition, the low-pressure chamber 97 communicates with the high-pressure chamber 93 through the slight gap S1 formed in the boundary portion K1 between the sliding portion 75S of the plunger 75 and the inner cylinder 86. Such a gap functions as an orifice, maintaining a differential pressure between the low-pressure chamber 97 and the high-pressure chamber 93. In the present configuration, a pressure relationship of the pressure of the high-pressure chamber 93 > the pressure of the inner cylinder hydraulic chamber 92 > the pressure of the low-pressure chamber 97 is maintained.

When the plunger 75 is moved by a force applied from the cam chain 55 with the high-pressure chamber 93 in the plunger 75 being narrowed, the above configuration makes it possible for the oil in the high-pressure chamber 93 to enter the low-pressure chamber 97 through the gap 93S between the inner cylinder 86 and the plunger 75 and the boundary portion K1, flowing from the low-pressure chamber 97 to be drained out of the plunger 75 through the boundary portion K2 between the plunger 75 and the tensioner body 72.

The flow-passage resistance in such an oil draining route provides a damping effect that damps a reciprocating motion of the plunger 75. In addition, when a displacement of the plunger 75 makes the high-pressure chamber 93 larger, the oil is fed from the inner cylinder hydraulic chamber 92 to the high-pressure chamber 93, filling the high-pressure chamber 93 with the oil.

As described above, the hydraulic tensioner 71 according to the present embodiment includes the low-pressure chamber 97 (second hydraulic chamber) downstream of the high-pressure chamber 93 (hydraulic chamber) where the oil is fed from the oil feeder 94, the low-pressure chamber 97 having a pressure lower than the pressure of the high-pressure chamber 93. The low-pressure chamber 97 communicates with the outside of the hydraulic tensioner 71 through the gap S2 (corresponding to the draining oil passage 98) formed in the boundary portion K2 between the outer circumferential surface of the plunger 75 and the inner circumferential surface of the tensioner body 72.

This causes the oil in the high-pressure chamber 93 to readily flow into the low-pressure chamber 97, thus causing the oil from the oil feeder 94 to readily flow into the high-pressure chamber 93. Thus, even the small-displacement engine 41, an oil pump of which has a relatively low discharge pressure, is able to readily feed the oil to the high-pressure chamber 93.

In addition, since the oil feeder 94 includes the inner cylinder hydraulic chamber 92 (third hydraulic chamber) into which the oil flows and the pressure of the inner cylinder hydraulic chamber 92 is higher than the pressure of the low-pressure chamber 97, the oil is more readily fed to the high-pressure chamber 93 due to the differential pressure between the inner cylinder hydraulic chamber 92 and the low-pressure chamber 97 even when the hydraulic pressure of the oil feeder 94 is low.

In addition, there is provided the cover member 76 (flange member) that closes one end of the plunger housing hole 72A and the cover member 76 is provided with the third oil passage 81C (feeding oil passage) that constitutes at least a part of the oil feeder 94. The third oil passage 81C communicates with the inner cylinder hydraulic chamber 92, and a center axis (corresponding to the axis LL) of the inner cylinder hydraulic chamber 92 is perpendicular to the third oil passage 81C and larger in diameter than the third oil passage 81C.

This makes it possible to transfer the hydraulic pressure from the oil feeder 94 to the plunger 75 without delay when oil feeding is started from the stop state, for example. It should be noted that a direction where the center axis (axis LL) of the inner cylinder hydraulic chamber 92 extends is not necessarily limited to the direction perpendicular to the third oil passage 81C but may be any direction intersecting the third oil passage 81C.

In addition, the plunger 75 includes the sliding portion 75S that slides on the outer circumferential surface of the inner cylinder 86 in the advance direction and the direction opposite to the advance direction and the oil from the high-pressure chamber 93 enters the low-pressure chamber 97 through the boundary portion K1 between the sliding portion 75S of the plunger 75 and the inner cylinder 86. Thus, the boundary portion K1 functions as an orifice, making it easy to keep the high-pressure chamber 93 at a high pressure and allowing the oil in the high-pressure chamber 93 to flow into the low-pressure chamber 97.

In addition, since the low-pressure chamber 97 is a part surrounded by the tensioner body 72, the plunger 75, the inner cylinder 86, and the cover member 76, the low-pressure chamber 97 is easy to form without the necessity of increasing the number of components.

In addition, the cover member 76 is provided with the branched oil passage 91 branched downward from the third oil passage 81C, which constitutes a part of the oil feeding oil passage 81, to be continuous with the inner cylinder hydraulic chamber 92. The third oil passage 81C is inclined with respect to a horizontal plane when the saddled vehicle 10 is on the ground and the inlet 81C1 of the third oil passage 81C is disposed at a level lower than a level of the outlet 81C2 of the third oil passage 81C. This allows for guiding the air (corresponding to bubbles) mixed in the oil to the outlet 81C2 of the third oil passage 81C, thereby making it difficult for the air to enter the inner cylinder hydraulic chamber 92.

For example, although it is described that the hydraulic tensioner 71 may be included in the saddled vehicle 10 shown in Figure 1 in the above embodiment, it is not limitative. The hydraulic tensioner 71 may be included in any other saddled vehicle, any vehicle other than saddled vehicles, or any device other than vehicles.

In addition, although it is described that the present invention is applied to the hydraulic tensioner 71 that adjusts a slack of the cam chain 55 of the engine 41, the use application of the hydraulic tensioner 71 is not limitative. For example, the present invention may be applied to a hydraulic tensioner that adjusts a similar transfer member such as a belt or a rope. Reference Signs List

- 10: saddled vehicle
- 12: power unit
- 41: engine (internal combustion engine)
- 41A: tensioner attachment portion
- 44: cylinder
- 55: cam chain (transfer member)
- 61: tensioner slipper (biased member)
- 63: chain guide
- 71: hydraulic tensioner
- 72: tensioner body
- 72A: plunger housing hole
- 72T: upper surface of tensioner body
- 73: cap
- 73A: through hole
- 74, 77: fastening member
- 75: plunger
- 75S: sliding portion
- 76: cover member (flange member)
- 81: oil feeding oil passage
- 81A: first oil passage
- 81B: second oil passage
- 81C: third oil passage (feeding oil passage)
- 81C1: inlet of third oil passage
- 81C2: outlet of third oil passage
- 81D: fourth oil passage
- 83: coil spring (biasing unit)
- 86: inner cylinder
- 87, 88: O-ring
- 91: branched oil passage
- 92: inner cylinder hydraulic chamber (third hydraulic chamber)
- 93: high-pressure chamber (hydraulic chamber)
- 93S: gap
- 94: oil feeder
- 95: check valve unit
- 97: low-pressure chamber (second hydraulic chamber)
- 97A: first space
- 97B: second space
- 98: draining oil passage
- K1: boundary portion between sliding portion of
- K2: plunger and inner cylinder boundary portion between plunger and
- K3: tensioner body oil drain port
- LL: axis of plunger
- S1, S2: slight gap

## Claims

1. A hydraulic tensioner comprising:
a tensioner body (72) provided with a housing hole (72A) that is open at one end and at another end;
a plunger (75) that is slidably inserted in the housing hole (72A) ;
a biasing unit (83) housed in a hydraulic chamber (93) formed between the housing hole (72A) and the plunger (75) to be extendable and retractable, the biasing unit (83) biasing the plunger (75) in a direction towards a tensioner slipper (61);
an oil feeder (94) that communicates with the hydraulic chamber (93) and feeds an oil to the hydraulic chamber (93);
a check valve unit (95) disposed between the hydraulic chamber (93) and the oil feeder (94); and
a second hydraulic chamber (97) that has a pressure lower than a pressure of the hydraulic chamber (93) and into which the oil from the hydraulic chamber (93) flows, the second hydraulic chamber (97) being provided with a draining oil passage (98) for draining the oil out of the hydraulic tensioner at the other end, wherein
the hydraulic tensioner may be attached to an internal combustion engine (41) installed in a saddled vehicle (10),
the hydraulic tensioner comprises a flange member (76) that closes the one end of the housing hole (72A),
the flange member (76) is provided with a feeding oil passage (81C) including at least a part of the oil feeder (94) and a branched oil passage (91) branched downward from the feeding oil passage (81C) to be continuous with the hydraulic chamber (93),
the feeding oil passage (81C) is inclined with respect to a horizontal plane when the saddled vehicle (10) is on a ground, and
an inlet (81C1) of the feeding oil passage (81C) in the flange member (76) is disposed at a level lower than a level of an outlet (81C2) of the feeding oil passage (81C) in the flange member (76).

2. The hydraulic tensioner according to claim 1, wherein
the oil feeder (94) includes a third hydraulic chamber (92) into which the oil from the branched oil passage (91) flows, and
the third hydraulic chamber (92) has a pressure higher than the pressure of the second hydraulic chamber (97).

3. The hydraulic tensioner according to claim 2, wherein a center axis of the third hydraulic chamber (92) intersects with the feeding oil passage (81C) and has a diameter larger than a diameter of the feeding oil passage (81C).

4. The hydraulic tensioner according to claim 3, further comprising an inner cylinder (86) inside the plunger (75), wherein
the plunger (75) includes a sliding portion (75S) that slides on an outer circumferential surface of the inner cylinder (86) in the direction and another direction opposite to the said direction,
the hydraulic chamber (93) is formed between the plunger (75) and the inner cylinder (86), and
the oil from the hydraulic chamber (93) flows into the second hydraulic chamber (97) through a boundary portion (K1) between the sliding portion (75S) and the inner cylinder (86S).

5. The hydraulic tensioner according to claim 4, wherein the second hydraulic chamber (97) includes a portion surrounded by the tensioner body (72), the plunger (75), the inner cylinder (86), and the flange member (76).

## Patentansprüche

1. Hydraulikspanner, der aufweist:
einen Spannerkörper (72), der mit einer Gehäuseöffnung (72A) vorgesehen ist, die an einem Ende und an einem anderen Ende offen ist;
einen Kolben (75), der verschiebbar in die Gehäuseöffnung (72A) eingesetzt ist;
eine Vorspanneinheit (83), die in einer Hydraulikkammer (93) aufgenommen ist, die zwischen der Gehäuseöffnung (72A) und dem Kolben (75) ausgebildet ist, um erweiterbar und zurückziehbar zu sein, wobei die Vorspanneinheit (83) den Kolben (75) in einer Richtung zu dem Spanngleiter (61) vorspannt;
eine Ölzuführung (94), die mit der Hydraulikkammer (93) in Austausch steht und Öl der Hydraulikkammer (93) zuführt;
eine Rückschlagventileinheit (95), die zwischen der Hydraulikkammer (93) und der Ölzuführung (94) angeordnet ist; und
eine zweite Hydraulikkammer (97), die einen Druck niedriger als ein Druck der Hydraulikkammer (93) hat und in die das Öl aus der Hydraulikkammer (93) fließt, wobei die zweite Hydraulikkammer (97) mit einem Ablassölkanal (98) zum Ablassen des Öls aus dem Hydraulikspanner am anderen Ende vorgesehen ist, wobei
der Hydraulikspanner an einem Verbrennungsmotor (41) angebracht sein kann, der in einem Sattelsitzfahrzeug (10) angebracht ist,
der Hydraulikspanner ein Flanschelement (76) aufweist, das das eine Ende der Gehäuseöffnung (72A) schließt,
das Flanschelement (76) mit einem Zuführungsölkanal (81C) vorgesehen ist, der wenigstens einen Teil der Ölzuführung (94) aufweist und einen Verzweigungsölkanal (91),
der von dem Zuführungsölkanal (81C) nach unten verzweigt ist, um mit der Hydraulikkammer (93) fortlaufend zu sein,
der Zuführungsölkanal (81C) bezüglich einer horizontalen Ebene geneigt ist, wenn sich das Sattelsitzfahrzeug (10) am Boden befindet, und
ein Einlass (81C1) des Zuführungsölkanals (81C) im Flanschelement (76) an einer Ebene unter einer Ebene eines Auslasses (81C2) des Zuführungsölkanals (81C) im Flanschelement (76) angeordnet ist.

2. Hydraulikspanner nach Anspruch 1, wobei
die Ölzuführung (94) eine dritte Hydraulikkammer (92) aufweist, in die das Öl aus dem Verzweigungsölkanal (91) fließt, und
die dritte Hydraulikkammer (92) einen Druck höher als der Druck der zweiten Hydraulikkammer (97) hat.

3. Hydraulikspanner nach Anspruch 2, wobei eine Mittelachse der dritten Hydraulikkammer (92) einen Zuführungsölkanal (81C) schneidet und einen Durchmesser größer als ein Durchmesser des Zuführungsölkanals (81C) hat.

4. Hydraulikspanner nach Anspruch 3, der weiterhin einen Innenzylinder (86) im Kolben (75) aufweist, wobei der Kolben (75) einen Gleitbereich (75S) aufweist, der an einer Außenumfangsfläche des Innenzylinders (86) in der Richtung und einer anderen Richtung entgegengesetzt zu der Richtung gleitet,
die Hydraulikkammer (93) zwischen dem Kolben (75) und dem Innenzylinder (86) ausgebildet ist, und
das Öl aus der Hydraulikkammer (93) in die zweite Hydraulikkammer (97) über einen Begrenzungsbereich (K1) zwischen dem Gleitbereich (75S) und dem Innenzylinder (86S) fließt.

5. Hydraulikspanner nach Anspruch 4, wobei die zweite Hydraulikkammer (97) einen Bereich aufweist, der von dem Spannerkörper (72), dem Kolben (75), dem Innenzylinder (86) und dem Flanschelement (76) umgeben ist.

## Revendications

1. Tendeur hydraulique comprenant :
un corps de tendeur (72) pourvu d'un trou de logement (72A) qui est ouvert à une extrémité et à une autre extrémité ;
un piston plongeur (75) qui est inséré de manière coulissante dans le trou de logement (72A) ;
une unité de déviation (83) logée dans une chambre hydraulique (93) formée entre le trou de logement (72A) et le piston plongeur (75) pour être extensible et rétractable, l'unité de déviation (83) déviant le piston plongeur (75) dans une direction vers un patin de tendeur (61) ;
un dispositif d'alimentation en huile (94) qui communique avec la chambre hydraulique (93) et alimente en huile la chambre hydraulique (93) ;
une unité clapet anti-retour (95) disposée entre la chambre hydraulique (93) et le dispositif d'alimentation en huile (94) ; et
une deuxième chambre hydraulique (97) qui a une pression plus basse qu'une pression de la chambre hydraulique (93) et dans laquelle l'huile à partir de la chambre hydraulique (93) s'écoule, la deuxième chambre hydraulique (97) étant pourvue d'un passage d'huile de vidange (98) pour vidanger l'huile hors du tendeur hydraulique à l'autre extrémité, dans lequel
le tendeur hydraulique peut être fixé à un moteur à combustion interne (41) installé dans un véhicule à selle (10),
le tendeur hydraulique comprend un élément bord (76) qui ferme l'extrémité du trou de logement (72A),
l'élément bord (76) est pourvu d'un passage d'huile d'alimentation (81C) comportant au moins une partie du dispositif d'alimentation en huile (94) et d'un passage d'huile ramifié (91) ramifié vers le bas à partir du passage d'huile d'alimentation (81C) pour être continu avec la chambre hydraulique (93),
le passage d'huile d'alimentation (81C) est incliné par rapport à un plan horizontal lorsque le véhicule à selle (10) est sur un sol, et
une entrée (81C1) du passage d'huile d'alimentation (81C) dans l'élément bord (76) est disposée à un niveau plus bas qu'un niveau d'une sortie (81C2) du passage d'huile d'alimentation (81C) dans l'élément bord (76).

2. Tendeur hydraulique selon la revendication 1, dans lequel
le dispositif d'alimentation en huile (94) comporte une troisième chambre hydraulique (92) dans laquelle l'huile à partir du passage d'huile ramifié (91) s'écoule, et
la troisième chambre hydraulique (92) a une pression plus élevée que la pression de la deuxième chambre hydraulique (97).

3. Tendeur hydraulique selon la revendication 2, dans lequel un axe central de la troisième chambre hydraulique (92) croise le passage d'huile d'alimentation (81C) et a un diamètre plus grand qu'un diamètre du passage d'huile d'alimentation (81C).

4. Tendeur hydraulique selon la revendication 3, comprenant en outre un cylindre intérieur (86) à l'intérieur du piston plongeur (75), dans lequel
le piston plongeur (75) comporte une portion coulissante (75S) qui coulisse sur une surface circonférentielle extérieure du cylindre intérieur (86) dans la direction et une autre direction opposée à ladite direction,
la chambre hydraulique (93) est formée entre le piston plongeur (75) et le cylindre intérieur (86), et
l'huile à partir de la chambre hydraulique (93) s'écoule dans la deuxième chambre hydraulique (97) à travers une portion limite (K1) entre la portion coulissante (75S) et le cylindre intérieur (86S).

5. Tendeur hydraulique selon la revendication 4, dans lequel la deuxième chambre hydraulique (97) comporte une portion entourée par le corps de tendeur (72), le piston plongeur (75), le cylindre intérieur (86), et l'élément bord (76).
